Europäisches Patentamt

European Patent Office

Office européen des brevets

(11) Veröffentlichungsnummer: **0 456 873 A1**

# (12) EUROPÄISCHE PATENTANMELDUNG

(21) Anmeldenummer: 90109483.9

(22) Anmeldetag: 18.05.90

(51) Int. Cl.⁵: **G01L 9/12**

(43) Veröffentlichungstag der Anmeldung:
**21.11.91 Patentblatt 91/47**

(84) Benannte Vertragsstaaten:
**AT BE CH DE DK ES FR GB GR IT LI LU NL SE**

(71) Anmelder: **HOTTINGER BALDWIN
MESSTECHNIK GMBH
Im Tiefen See 45 Postfach 42 35
W-6100 Darmstadt(DE)**

(72) Erfinder: **Philipps, Michael
Am Hopfengarten 16
W-6100 Darmstadt(DE)**

Erfinder: **Schad, Hans-Dieter
Ludwigstrasse 58
W-6108 Weiterstadt 8(DE)**
Erfinder: **Viel, Wolfgang
Ruthstrasse 20
W-6100 Darmstadt(DE)**

(74) Vertreter: **Brandt, Ernst-Ulrich
Hottinger Baldwin Messtechnik GmbH
Patentabteilung Im Tiefen See 45 Postfach
42 35
W-6100 Darmstadt(DE)**

(54) **Kapazitiver Druckaufnehmer.**

(57) Ein kapazitiver Druckaufnehmer weist eine Meß-membran (1) auf, die auf ihrer einen Seite mit dem zu messenden Druck beaufschlagbar ist. Die Meß-membran (1) ist an ihrem Rand einstückig mit einem Einschraubzylinder (2) verbunden. Eine Trägerplatte (6) ist über einen ringförmigen Abstandshalter (8) mit dem Umfang der Meßmembran (1) verbunden und trägt eine Meßelektrode (7), die mit der Meß-membran (1) einen Meßkondensator bildet. Radial außerhalb des ringförmigen Abstandshalters (8) liegt eine Referenzelektrode (9), die mit einem radial au-ßerhalb des Umfangs der Meßmembran (1) liegen-den Randflansch (5) einen Referenzkondensator bil-det.

Rank Xerox (UK) Business Services

EP 0 456 873 A1

Die Erfindung betrifft einen kapazitiven Druk-kaufnehmer mit einer auf ihrer einen Seite mit Druck beaufschlagbaren, an ihrem Rand eingespannten Meßmembran, deren andere Seite mit einer an eine Trägerplatte angebrachten Meßelektrode einen Meßkondensator bildet, und einem in der gleichen Ebene und konzentrisch dazu angeordneten Referenzkondensator, der eine an der Trägerplatte angebrachte Referenzelektrode aufweist.

Kapazitive Druckaufnehmer dienen dazu, die zu messenden Drücke, beispielsweise in hydraulischen Anlagen oder in der Verfahrenstechnik, in elektrische Meßsignale umzusetzen. Für diese Einsatzbereiche ist es wichtig, daß der Druckaufnehmer einerseits eine hohe Reproduzierbarkeit des Meßwerts, andererseits auch eine hohe Überlastfestigkeit aufweist.

Kapazitive Druckaufnehmer setzen die Verformung der druckbeaufschlagten Meßmembran über Kapazitätsänderungen des Meßkondensators in ein elektrisch auswertbares Signal um. Da hierfür bereits sehr geringe Abstandsänderungen im Meßkondensator ausreichen, kann die Meßmenbran verhältnismäßig starr ausgeführt werden, so daß sich eine hohe Überlastfestigkeit ergibt.

Da geringe Abstandsänderungen im Meßkondensator bereits zu starken Veränderungen des abgegebenen elektrischen Signals führen, sind derartige kapazitive Druckaufnehmer gegenüber allen Störeinflüssen empfindlich, die zu einer solchen Abstandsänderung führen. Hierzu zählen insbesondere Einflüsse im Bereich der Einspannung und Abdichtung der Meßmembran.

Bei einem bekannten kapazitiven Druckaufnehmer der eingangs genannten Gattung ("Keine Angst vor Überlast" Zeitschrift techno-tip Nr. 5, Mai 1988, S. 80-84) ist die aus Keramik bestehende Meßmembran an ihrem Rand an einem Grundkörper abgestützt und eingespannt, der die Trägerplatte für die Meßelektrode und die konzentrisch dazu angebrachte Referenzelektrode bildet. Die aus diesen Teilen bestehende Meßzelle ist über eine Elastomerdichtung mit einem metallischen Rohranschluß verbunden. Unter dem Einfluß der jeweiligen Vorspannung und der Temperatur dieser Elastomerdichtung ändert sich die Einspannung der Meßmembran, so daß die Meßgenauigkeit des Druckaufnehmers beeinflußt wird.

Aufgabe der Erfindung ist es daher, einen kapazitiven Druckaufnehmer der eingangs genannten Gattung so auszubilden, daß der Anschluß und die Abdichtung der druckführenden Teile keinen Einfluß auf die Meßgenauigkeit, insbesondere die Linearität des Druckaufnehmers ausüben.

Diese Aufgabe wird erfindungsgemäß dadurch gelöst, daß die Meßmembran aus Metall besteht und an ihrem Umfang einstückig mit einem Einschraubzylinder verbunden ist, daß die Trägerplatte über einen ringförmigen Abstandshalter mit dem Umfang der Meßmembran verbunden ist und daß die Referenzelektrode radial außerhalb des ringförmigen Abstandshalters liegt und mit einem radial außerhalb des Umfangs der Meßmembran liegenden Randflansch den Referenzkondensator bildet.

Durch die einstückige metallische Verbindung der Meßmembran mit dem Einschraubzylinder wird erreicht, daß die Meßmembran nicht mit einer Dichtung, insbesondere einer Elastomerdichtung, in Berührung steht, deren Vorspannung und Temperatur einen Einfluß auf die Meßmembran ausüben könnte.

Die für die Einhaltung des Kondensatorspalts wichtige Abstützung zwischen der Meßelektrode bzw. der Referenzelektrode einerseits und der Meßmembran andererseits erfolgt über den ringförmigen Abstandshalter in einem Bereich, der auch bei hohen Druckänderungen weitestgehend unverformt bleibt, nämlich an dem einstückig mit dem starren Einschraubzylinder verbundenen Umfang der Meßmembran. Der sich radial nach außen anschließende ringförmige Meßkondensator liegt außerhalb der druckbeaufschlagten Meßmembran und ist damit weitgehend frei von Verformungen.

Die Abdichtung zwischen dem Druckaufnehmer und den angeschlossenen druckführenden Teilen erfolgt in einem von der Meßmembran weit entfernt liegenden Bereich, nämlich am entgegengesetzten Ende des Einschraubzylinders. Dort kann eine Dichtung, beispielsweise eine Elastomerdichtung vorgesehen werden, deren Vorspannung durch die Einschraubkraft des Einschraubzylinders erzeugt wird und ohne Einwirkungen auf die Meßmembran ist.

Die die Meßelektrode und die Referenzelektrode tragende Trägerplatte liegt vollständig außerhalb des von dem zu messenden Druck beeinflußten Bereichs. Da wie dargelegt, auch die Abstützung dieser Trägerplatte am Umfang der Meßmembran in einem Bereich erfolgt, der nicht von druckbedingten Verformungen beeinflußt wird, werden durch die Verformungen der Meßmembran keine Kräfte auf die Trägerplatte ausgeübt. Die Trägerplatte kann daher als dünnes Plättchen ausgeführt sein.

Vorzugsweise besteht die Meßmembran mit dem Einschraubzylinder und dem Randflansch einstückig aus Stahl. Ein solches, im wesentlichen napfförmiges Meßbauteil, das in seinem Inneren mit den zu messenden Drücken beaufschlagt wird, wird auch bei sehr hoher Überlast nicht zerstört und ergibt daher eine hohe Überlastfestigkeit des Druckaufnehmers.

Bei der Ausführung aus Stahl können die Außenflächen der Meßmembran und des Randflansches, die in einer gemeinsamen Ebene liegen und deshalb mit hoher Genauigkeit gemeinsam bearbeitet werden können, unmittelbar jeweils die eine Elektrode bzw. Kondensatorplatte des Meßkondensators und des Referenzkondensators bilden. Zweckmäßigerweise bildet der ringförmige Abstandshalter, der beispielsweise durch eine elektrisch leitende Klebeschicht gebildet wird, in konstruktiv sehr einfacher Weise die elektrisch leitende Verbindung zur Meßmembran und dem Randflansch.

Weitere vorteilhafte Ausgestaltungen des Erfindungsgedankens sind Gegenstand weiterer Unteransprüche.

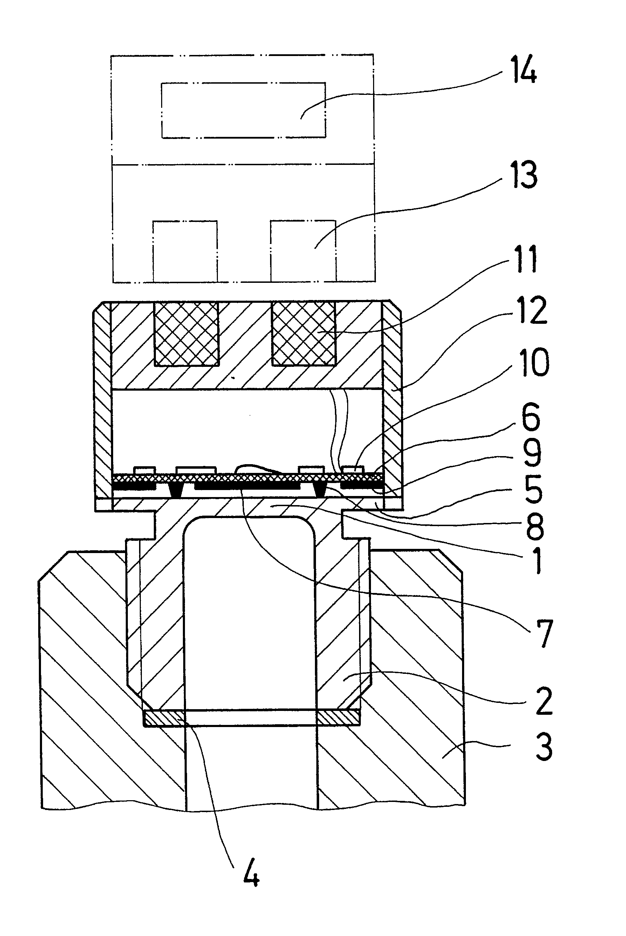

Nachfolgend wird ein Ausführungsbeispiel der Erfindung näher erläutert, das in der Zeichnung dargestellt ist.

Die Zeichnung zeigt einen vereinfachten Längsschnitt durch einen kapazitiven Druckaufnehmer. Eine als ebene Kreisplatte ausgeführte Meßmembran 1 ist an ihrem Umfang mit einem Einschraubzylinder 2 verbunden, der an ein druckführendes Anschlußteil 3 angeschlossen ist, das in der Zeichnung nur schematisch angedeutet ist.

Eine Ringdichtung 4 an dem der Meßmembran abgekehrten Ende des Einschraubzylinders 2 dichtet den Einschraubzylinder 2 gegenüber dem Anschlußteil 3 ab und erhält die zur Abdichtung erforderliche Vorspannkraft durch das Einschraubmoment des Einschraubzylinders 2.

Radial außerhalb und in gleicher Ebene mit der Meßmembran 1 liegt ein Randflansch 5. Die Meßmembran 1, der Einschraubzylinder 2 und der Randflansch 5 sind einstückig aus Stahl hergestellt und bilden ein im wesentlichen napfförmiges, in seinem Inneren mit den zu messenden Drücken beaufschlagbares Meßbauteil, wobei die Drücke die Meßmembran 1 verformen.

Eine dünne Trägerplatte 6 aus Keramik trägt an ihrer der Meßmembran 1 zugekehrten Seite in ihrem mittleren Bereich eine Meßelektrode 7, die zusammen mit der in geringem Abstand dazu angeordneten Außenseite der Meßmembran 1 einen Meßkondensator bildet. Verformungen der Meßmembran 1 durch Änderungen des zu messenden Drucks führen zu einer Änderung des Abstands zwischen der Meßelektrode 7 und der Meßmembran 1 und führen zu Kapazitätsänderungen des Meßkondensators.

Ein die Meßelektrode 7 umgebender ringförmiger Abstandshalter 8, der bei dem dargestellten Ausführungsbeispiel durch eine elektrisch leitende Klebeschicht gebildet wird, stützt sich am Umfang der Meßmembran 1 in dem Bereich ab, in dem die Meßmembran mit dem Einschraubzylinder 2 verbunden ist. Radial außerhalb des Abstandshalters 8 ist an der Trägerplatte 6 eine kreisringförmige Referenzelektrode 9 angebracht, die zusammen mit dem gegenüberliegenden Randflansch 5 einen Referenzkondensator bildet, dessen Kondensatorspalt bei einer Verformung der Meßmembran 1 weitgehend unverändert bleibt.

Die sich druckabhängig ändernde Kapazität des Meßkondensators, der von der Meßmembran 1 und der Meßelektrode 7 gebildet wird, und die gleichbleibende Referenzkapazität des Referenzkondensators, der durch die Referenzelektrode 9 und den Randflansch 5 gebildet wird, werden von einer Auswerteschaltung erfaßt, die als Hybridschaltung ausgeführt ist und auf der der Meßmembran 1 abgekehrten Rückseite der Trägerplatte 6 aufgebracht ist. Die zur Bestimmung der Kapazitäten erforderliche elektrisch leitende Verbindung zur Meßmembran 1 und dem Randflansch 5 erfolgt über den elektrisch leitenden Abstandshalter 8.

Zu der Auswerteschaltung gehört eine Sende- und Empfangsspule 11, die oberhalb der Trägerplatte 6 in einem gemeinsamen Gehäuse 12 angeordnet ist. Das Gehäuse 12 ist mit dem Umfang des Randflansches 5 verbunden und umschließt einen die elektrischen Bauteile aufnehmenden, nach außen abgeschlossenen Raum. Der Raum zwischen den Kondensatorplatten, d. h. zwischen den Elektroden 7 und 9 einerseits und der Meßmembran 1 bzw. dem Randflansch 5 andererseits kann mit einem flüssigen Dielektrikum gefüllt sein, das bei einer Abstandsänderung verdrängt werden kann. Dadurch werden die Kapazitäten vergrößert und die Auswertung erleichtert. Stattdessen kann dieser Raum zwischen den Kondensatorplatten aber auch mit Luft gefüllt sein.

Die Sende- und Empfangsspule 11 steht ohne galvanische Verbindung mit einer in der Zeichnung nur angedeuteten weiteren Sende- und Empfangsspule 13 induktiv in Verbindung, die die empfangenden Meßsignale an eine ebenfalls nur angedeutete Schaltung 14 weiterleitet.

Der dargestellte Druckaufnehmer bildet trotz kompakter Bauweise eine geschlossene, mechanisch robuste Einheit. Bei hohen Meßbereichen von ca. 500 bis 2000 bar verträgt der Druckaufnehmer ohne Beschädigung oder Zerstörung hohe Überlast-Druckspitzen. Veränderungen im Bereich der Dichtung 4, die durch Änderungen der Vorspannung und/oder der Temperatur auftreten, bleiben ohne jeden Einfluß auf die Meßmembran 1.

## Patentansprüche

1. Kapazitiver Druckaufnehmer mit einer auf ihrer einen Seite mit Druck beaufschlagbaren, an ihrem Rand eingespannten Meßmembran, deren andere Seite mit einer an eine Trägerplatte angebrachten Meßelektrode einen Meßkondensator bildet, und mit einem in der gleichen Ebene und konzentrisch dazu angeordneten Referenzkondensator, der eine an der Trägerplatte angebrachte Referenzelektrode aufweist, dadurch gekennzeichnet, daß die Meßmembran (1) aus Metall besteht und an ihrem Umfang einstückig mit einem Einschraubzylinder (2) verbunden ist, daß die Trägerplatte (6) über einen ringförmigen Abstandshalter (8) mit dem Umfang der Meßmembran (1) verbunden ist und daß die Referenzelektrode (9) radial außerhalb des ringförmigen Abstandshalters (8) liegt und mit einem radial außerhalb des Umfangs der Meßmembran (1) liegenden Randflansch (5) den Referenzkondensator bildet.

2. Druckaufnehmer nach Anspruch 1, dadurch gekennzeichnet, daß die Meßmembran (1) mit dem Einschraubzylinder (2) und dem Randflansch (5) einstückig aus Stahl besteht.

3. Druckaufnehmer nach Anspruch 1 oder 2, dadurch gekennzeichnet, daß die Meßmembran (1) mit dem Einschraubzylinder (2) ein napfförmiges, in seinem Inneren mit den zu messenden Drücken beaufschlagbares Meßbauteil bildet.

4. Druckaufnehmer nach Anspruch 1, dadurch gekennzeichnet, daß die Trägerplatte (6) aus Keramik besteht und auf ihrer der Meßmembran (1) abgekehrten Rückseite Teile (10) einer mit dem Meßkondensator (1, 7) und dem Referenzkondensator (5, 9) verbundenen Auswerteschaltung trägt.

5. Druckaufnehmer nach Anspruch 4, dadurch gekennzeichnet, daß die Auswerteschaltung mit einer Sende- und Empfangsspule (11) verbunden ist.

6. Druckaufnehmer nach Ansprüchen 4 und 5, dadurch gekennzeichnet, daß die Trägerplatte (6) mit der Auswerteschaltung und die Sende- und Empfangsspule (11) in einem Gehäuse (12) angeordnet sind, das mit dem Umfang des Randflanschs (5) verbunden ist.

7. Druckaufnehmer nach Anspruch 1, dadurch gekennzeichnet, daß der ringförmige Abstandshalter (8) eine elektrisch leitende Verbindung zur Meßmembran (1) und dem Randflansch (5) bildet.

8. Druckaufnehmer nach Anspruch 7, dadurch gekennzeichnet, daß der ringförmige Abstandshalter (8) durch eine elektrisch leitende Klebeschicht gebildet wird.

**Europäisches Patentamt**

# EUROPÄISCHER RECHERCHENBERICHT

Nummer der Anmeldung

**EP 90 10 9483**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | US-A-4 442 474   (J.N.M. DE JONG et al.)<br>* Das ganze Dokument * | 1-4 | G 01 L 9/12 |
| Y | US-A-4 125 027   (K.K. CLARK)<br>* Das ganze Dokument * | 1-4 | |
| Y | US-A-2 989 085   (M. DI GIOVANNI)<br>* Spalte 6, Zeilen 31-75; Spalte 7, Zeilen 1-59, Figur 7 * | 1-4 | |
| Y | US-A-4 499 773   (A.W. CRAMPTON et al.)<br>* Zusammenfassung; Spalte 3, Zeilen 22-26; Figuren * | 1-4 | |
| A | US-A-4 265 252   (J.G. CHUBBUCK et al.)<br>* Zusammenfassung; Figur 1 * | 5 | |
| | | | **RECHERCHIERTE SACHGEBIETE (Int. Cl.5)**<br><br>G 01 L 9 |

Der vorliegende Recherchenbericht wurde für alle Patentansprüche erstellt

| Recherchenort | Abschlußdatum der Recherche | Prüfer |
|---|---|---|
| Den Haag | 08 Januar 91 | VAN ASSCHE P.O. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes Dokument